# EUROPEAN PATENT SPECIFICATION

(11) **EP 1 518 613 B1**
(45) Date of publication and mention of the grant of the patent: **22.02.2012**
(21) Application number: 03761757.8
(22) Date of filing: 28.03.2003
(51) Int. Cl.: B09B 3/00, B01J 8/38, F23J 1/00, F23G 5/24, B01J 8/18, C10J 3/48, F23G 5/28, F23G 5/30, F23G 5/46

(54) **EQUIPMENT FOR HEAT-TREATING POWDER WASTE**
EINRICHTUNG ZUR WÄRMEBEHANDLUNG VON PULVERABFÄLLEN
EQUIPEMENT POUR LE TRAITEMENT THERMIQUE DE DECHETS SOUS FORME DE POUDRE

(30) Priority: 26.06.2002 JP 2002186459
(43) Date of publication of application: 30.03.2005
(73) Proprietor: JFE Engineering Corporation, Tokyo 100-0005 (JP)
(72) Inventor: SHIOMITSU, Toru c/o Intellectual Property Section, Tsuruumi-ku Yokohama-shi, Kanagawa 230- (JP); HIRAYAMA, Atsushi c/o Intellectual Property Secti., Tsururumi-ku Yokohama-shi, Kanagawa 230- (JP)
(74) Representative: Grünecker, Kinkeldey, Stockmair & Schwanhäusser
(86) International application number: PCT/JP2003/003939
(87) International publication number: WO 2004/002639

(56) References cited:
- EP-A1- 0 719 599
- EP-A1- 1 197 270
- WO-A1-89/09365
- JP-A- 7 328 595
- JP-A- 55 084 535
- JP-A- 2002 192 108
- JP-B1- 41 000 597
- JP-B2- 61 016 496
- US-A- 3 300 457
- US-A- 5 456 881

## Description

### FIELD OF THE INVENTION

The present invention relates to an apparatus for treating powdery waste by heating. For instance, the present invention relates to an apparatus for treating waste ash incinerated from refuses and the like by heating, in order to evaporate and remove dioxin, from the ash incinerated from refuse.

### BACKGROUND OF THE INTENTION

Recently, it has been found out that a wasted refuse incineration generates extremely toxic organic compounds such as dioxin. And, the environment resulting from the contamination is one of the serious problems in the world today. The dioxin exists in incineration flue gas that is discharged from the wasted refuse incinerator, in fly ash that is collected from the flue gas, and in bottom ash that is discharged from an incineration furnace.

Examined Japanese patent publication No.H-06-038863 discloses a method for decomposing dioxin by various catalysts. The publication also discloses a method for catalytically decomposing activated carbon and the like, which are used to collect dioxin by heating to gasify the dioxin, and a method for catalytically decomposing fly ash by heating under the atmospheric condition of deficient oxygen. The patent publication, however, does not disclose the concrete structure of the apparatus in detail, which is for heating to gasify the object.

Japanese Patent No. 2512665 (JP-A-H-06-159646, (the term "JP-A" referred herein signifies "Japanese Patent Laid-Open No.")) discloses a method for treating ash incinerated from refuse by heating, which is discharged from waste incineration facilities to decompose the existing organic chloride compounds in the ash incinerated from refuse, wherein the ash incinerated from refuse is heated within a range from 350 °C to 550°C, by submitting lime to the ash incinerated from refuse. The method secondary discloses that the ash incinerated from refuse is quenched to the equal or less than 250°C. The apparatus used in the ash incinerated from refuse treatment is a type of a horizontal rotary kiln.

JP-A-2000-16844 discloses a method for heating and decomposing dioxin by heating a material containing dioxin to the boiling temperature or more of dioxin. And the method discloses how to introduce the gas containing the vaporized dioxin into a cement-calcinination rotary kiln and how to decompose the dioxin by using the heat generated during calcining the cement.

Conventional apparatus that vaporizes and decomposes the existing dioxin in bottom ash and fly ash generated from the wasted refuse incineration is the rotary kiln. It is not so easy for the rotary kiln to decompose whole amount of the dioxin, to a degree that any dioxin becomes impossible to be synthesized. The fact invites a disadvantageous matter, that is, the investment cost is very expensive.

The heating apparatus such as the conventional rotary kiln has one of problem that efficient heat transfer cannot be obtained from the heated surface area to the wasted material area. Consequently, in case that the inefficient heat transfer goes on, it is required to rise the heated wall surface excessively, to a degree of the sufficient temperature for removing the dioxin. Such excessive heating causes an increase in the heating energy, which is required for heating. Additionally, the wasted refuse is apt to be adhesive to the inside surface of the heating apparatus, resulting from reaching to the excessive temperature. Therefore, the operational trouble is apt to happen from time to time.

Furthermore, such adhesion induces a vicious cycle that the heat transfer degrades more and more. As a countermeasure to avoid such troubles, a paddle blade may be used to remove the adhered material. This may be effective for scraping the material adhered to the wall surface. However, it is required to give a lot of power, in order to scrap the adhered material. As a result, the paddles have a possibility to receive the damage and to be abrasive. And as a result, high torque is required to drive the paddle. Such an apparatus is known from document EP 1 197 270 A1.

On the contrary, the inventors of the present invention conceived and have already developed a vertical and cylindrical heating treatment apparatus. The apparatus enables us to remove the dioxin efficiently, where the dioxin exists in the bottom ash and in the fly ash generated from wasted refuse incineration furnace. The apparatus makes it possible to detoxify the waste efficiently. The apparatus has an excellent characteristic that the peripheral walls of the vertical and cylindrical heat-container are used as the heated surface. And, the apparatus has agitator blades, which is structured of multistage paddle blades and, which is located inside the container. According to the heating apparatus of the present invention, air is injected from the bottom of the vertical and cylindrical container, where the waste is filled up, into the upper side of the container. At the same time, the agitator blades are used for agitating the material. In this agitating process, fine particles such as fly ash, which may be difficult to be fluidized, become to be fluidized uniformly. Such uniform fluidization brings up a good result of forming a homogeneous mixed layer, which is composed of solid (particles) and gas. In the process, the particles vigorously circulate in the fluidized bed. Consequently, the gas and the particle are easy to get contact with mutually. The contact efficiency becomes excellent between the gas and the particle.

In the present invention, the exchange rate of the particles against the wall of the fluidized bed layer becomes high. Such high exchange rate makes it possible to heat efficiently, whether heating by hot air is applied to or heating through the apparatus wall from the outside of the fluidized bed is applied to. Making use of such characteristics, for example, a drying device, where the hot air is usable as the fluid, becomes in practical use. When such advantageous fluidized bed is applied to the apparatus for heating the wasted material, the following advantageous matters are predicted.
① the temperatures inside the fluidized bed becomes uniform as a whole.
② without rising the temperature of the heated surface excessively, adhesive waste to the heated surface can be prevented,and,
high contact efficiency between gas and fluid is kept, which enhances vaporizing and eliminating or decomposing dioxin and the like.

However, whenever such vertical and cylindrical heat-container, which has agitator blades made of multistage paddle blades inside, are used or, whenever heating the waste simultaneously fluidizing are used, the following result may happen. For instance, the fluidized condition in the fluidized bed is significantly influenced by the fluidized particles (kinds of the wasted material), the flow rate of the fluid, and the shapes of the agitator blades structured by the paddle blades, and by other factors. As one of the important matters, the characteristic of the heat transfer is significantly dictated by the above-mentioned factors. Particularly, although the agitator blades made of paddle blades are essential for fluidizing the fine particles, some types of the shape of the agitator blades may make it impossible to enhance fluidizing particles. And they may result in degrading the advantage of the vertical and cylindrical heating apparatus provided with the agitator blades.

### SUMMARY OF THE INVENTION

The inventors of the present invention studied to solve the above-described problems, focusing on how to minimize the force for pushing the powdery waste in the rotational direction of the rotary agitator blades. The inventors have conceived and found out that how effective the agitator blade area horizontally projected is minimized. The inventors of the present invention have found the following good results. That is, combination of the fluidized bed heating apparatus with the paddle blades having small horizontally projected area enables us to fluidize powdery waste favorably, secures efficient treatment of powdery waste. And this enables us to solve the problem of the solid material adhesive to the inner peripheral wall of the heating apparatus.

The present invention has been studied and developed, based on the above-described findings, and provides the following apparatus and the method.
[1] An apparatus for treating a powdery waste by heating (1) comprising:
   a vertical and cylindrical heat-container (2) to hold a powdery waste;
   a gas inlet opening (5) located at a bottom portion of the vertical and cylindrical heat-container as a passage for introducing a gas to fluidize the powdery waste;
   a powdery waste holding section (7) located at a center portion of the vertical and cylindrical heat-container;
   a distributor (8) located at the bottom portion of the vertical and cylindrical heat-container and at an end of the passage for introducing the gas, in order to distribute the gas;
   a wind box section (16) located at the bottom portion of the vertical and cylindrical heat-container and beneath the gas distributor;
   a gas outlet opening (3) located above the vertical and cylindrical heat-container and connecting with the heat-container as a passage to discharge the gas;
   a powdery waste charge opening (4) located above the vertical and cylindrical heat-container and connecting with the heat-container as a passage to charge the powdery waste;
   a powdery waste discharge opening (6) located beneath the vertical and cylindrical heat-container and connecting with the heat-container as a passage to discharge the powdery waste;
   a rotary shaft (15) located inside the vertical and cylindrical container;
   paddle blades (12) as agitator blades located inside the vertical and cylindrical heat-container to agitate the powdery waste, wherein the agitator blades have 30% or less of the ratio of a horizontally projected area of the agitator blades to an area inside the envelope of outermost edges of the agitator blades;
   a motor (14) for rotating a shaft of the agitator blades; and
   a heating means (11) located at an outer periphery of the vertical and cylindrical heat-container for heating the powdery waste.
[2] The apparatus according to [1], further comprising agitator blades having multiple blades extending from the shaft in different directions.
[3] The apparatus according to [1] or [2], further comprising agitator blades configuring pluralities of bars lateral to the shaft.
[4] The apparatus according to [1] or [2], further comprising agitator blades structured by pluralities of bars diagonally crossing the agitator blades.
[5] The apparatus according to [1], further comprising a device for treating the powdery waste contaminated by an organic halogen compound, by heating.
[6] The apparatus according to [5] , further comprising a device connected to the gas outlet opening to detoxify the gas discharged from the gas outlet opening, wherein the device to detoxify the gas is at least one selected from the group consisting of a thermal decomposition apparatus for thermally decomposing the gas and a catalytic reactor for catalytically decomposing the gas.
[7] The apparatus according to [6], further comprising an apparatus connected to the gas outlet opening to remove dust from the gas discharged from the gas outlet opening, wherein the dust removing apparatus is connected with the gas outlet opening, and wherein the dust removing apparatus is located at an upstream side of a thermal decomposition apparatus and a catalytic reactor.
[8] A method for treating a powdery waste by heating comprising the steps of:
   charging a powdery waste to a vertical and cylindrical heat-container from a top portion to hold the powdery waste at a powdery waste holding section;
   fluidizing the powdery waste in a vertical and cylindrical heat-container by introducing a gas from a bottom portion;
   heating the powdery waste in the vertical and cylindrical heat-container;
   agitating the powdery waste in the vertical and cylindrical heat-container using paddle blades as agitator blades mounted in the vertical and cylindrical heat-container, wherein the agitator blades is determined to be 30% or less of the ratio of the horizontally projected area of the agitator blades to an area inside the envelope of outermost edges of the agitator blades;
   discharging the powdery waste treated by heating from the vertical and cylindrical heat-container; and
   discharging the gas from the vertical and cylindrical heat-container.
[9] The method according to [8] further comprising the step of heating the powdery waste contaminated by an organic halogen compound to vaporize the organic halogen compound and to remove the vaporized organic halogen compound along with the discharging gas.
[10] The method according to [8], wherein the rate of the gas introduced to the vertical and cylindrical heat-container is in a range of approximately from 0.01 to 2 Nm³/kg of the powdery waste.
[11] The method according to [8], wherein the speed of the gas introduced to the vertical and cylindrical heat-container is in a range of approximately from 0.1 to 30 Ncm/sec.
[12] The method according to [8], wherein the step of heating the powdery waste comprises at least one step selected from the group consisting of heating the powdery waste from an external surface of the vertical and cylindrical heat-container and adopting hot gas as the gas to fluidize the powdery waste.
[13] The method according to [8], wherein the step of agitating the powdery waste in the vertical and cylindrical heat-container adopts a rotational speed of the agitator blades in a range of approximately from 1 to 200 rpm.
[14] The method according to [8], wherein the powdery waste introduced into the vertical and cylindrical heat-container has mean particle size of approximately from 0.1 to 1000 µm, and has densities of approximately from 0.1 to 5 g/cm³.
[15]The method of [9], wherein the powdery waste contaminated by an organic halogen compound is heated to temperatures of approximately from 350°C to 550°C at approximate average retention time of from 5 to 180 min.
[16] The method according to [8], wherein the powdery waste is introduced to the vertical and cylindrical heat-container comprises at least one material selected from the group consisting of, incinerated ash or fly ash discharged from waste incineration furnace, material containing organic halogen compound, sludge or mud coming from water treatment or sewage treatment, sand, soil, river bottom sand, lake bottom mud, sea bottom mud, or slurry of waste soil that contain organic matter, organic halide, or heavy metal.
[17] The method according to [9] further comprising the step of removing dust from the gas containing vaporized harmful organic halogen compound using a dust separator before the thermal decomposition step and the catalytic reaction step.
[18] The method according to [9], wherein the harmful organic halogen compound existed in the discharged gas is thermally decomposed at heating temperatures of approximately from 8000°C to 1000°C at retention time of approximately from 0.5 to 20 sec.
[19] The method of [9], wherein the harmful halogen compound existed in the discharged gas is catalytically reacted at temperatures of approximately from 150°C to 400°C at space velocities of from 1000 to 10000 h⁻¹.

### Brief Description of the Drawings

Figure 1 illustrates an apparatus for treating by heating, as one example of the present invention;
Figure 2 illustrates the fluidized bed model, according to one example of the present invention;
Figure 3 shows the configuration of an apparatus for treating waste, according to an example of the present invention;
Figure 4 shows the front view of agitator blades of a comparative example;
Figure 5 shows the front view of agitator blades according to another example of the present invention;
Figure 6 shows the front view of agitator blades according to another example of the present invention;
Figure 7 shows the front view of agitator blades according to another example of the present invention;
Figure 8 shows the front view of agitator blades according to another example of the present invention;
Figure 9 shows the front view of agitator blades according to another example of the present invention;
Figure 10 shows the front view of agitator blades according to another example of the present invention;
Figure 11 shows the front view of agitator blades according to another example of the present invention; and
Figure 12 shows the front view of agitator blades according to another example of the present invention.

### Description of the Preferred Embodiment

The vertical and cylindrical heat-container contains a powdery material holding section for holding the powdery material. And the container may be a straight cylinder or the container may be a cylinder that has different diameters at sections. The cylinder has a shorter diameter and a longer diameter, whichever is shorter and whichever is longer, concerning a tapered cylinder configuration between a top portion and a bottom portion. Both of the top face and the bottom face of the container are normally closed. The container forms, totally, an enclosed structure. Both of the top face and the bottom face of the container possess, respectively, a flat face, a curved face, a conical face, or the like. The capacity of the container is designed, taking the quantity of the treated powdery material into consideration. Normally, however, the capacity of the container is within a range approximately from 0.01 to 100 m³, particularly approximately from 0.2 to 10 m³.

The heat-container needs an inlet and an outlet for the powdery wasted material, in order for the gas to fluidize the powdery wasted material. The gas inlet opening and the gas outlet opening are provided at the bottom portion and the top portion of the heat-container, respectively, in order to inject the gas beneath the powdery waste bed and to pass through the bed upward, thus fluidizing the powdery waste. The gas outlet opening has, as a case may be, a dust-removal device such as a dust filter, a cyclone, an electrostatic precipitator, or a ceramics filter.

The inlet and outlet openings for the powdery waste may be placed at an arbitrary position, respectively, if they can charge a powdery waste or discharge a powdery waste. However, the charge opening for the powdery waste is preferably located at the upper portion of the container, and the discharge opening is preferably located at the lower portion of the container. In an apparatus holding a batch-wise process, one opening may be useable for both functions of the charge opening and the discharge opening.

The gas, which fluidizes the powdery wasted material, also has a transporting function to transport the vaporized dioxin by heating the gas. This transporting function is usable for discharging the vaporized dioxin from the inside of the container. The inlet opening for injecting the gas is located at the bottom portion of the container. For instance, the inlet opening is located at the bottom face or at the lower end of the side face of the container. The inlet opening for injecting the gas may be installed, taking the size of the heat-container into consideration, for instance, based on the capacity of the vertical cylinder. In the exemplary embodiment, the inlet opening for injecting the gas may be single, or dual or more multiple of ring spurgers. The inlet opening for injecting the gas may have a perforated plate in order to uniform the blown gas and in order to prevent the powdery wasted material from entering into the inlet for injecting the gas. The injected amount of the gas is in a range of approximately from 0.01 to 2 Nm³/kg, preferably approximately from 0.1 to 1 Nm³/kg. And, the rate is approximately from 0.1 to 30 cm³/sec., and preferably approximately from 1 to 10 cm³/sec.

The method for heating the wasted material in the heat-container, which has a shape of the vertical cylinder, may be usable as various methods, for instance, a method for heating the gas from the external periphery of the cylinder, or a method for heating the gas by hot air, which fluidizes the powdery wasted material. It is preferable to apply both of the above-mentioned heating methods, simultaneously.

The heat-container is provided with agitator blades for agitating the powdery wasted material. A typical agitator blade is a paddle blade. The blade is in a shape of a rod, a plate, and the like. The following figures of the cross section are applied to the rod. For instance, they are complete round, ellipse, two arcs joined together, square, rectangular, and hexagonal. Plate includes flat plate and trough. Plate may be located horizontally, tilting, or vertically, preferably horizontal to tilted positions giving angles of from 0 to 60 degrees to the horizontal plane, more preferably from 0 to 45 degrees.

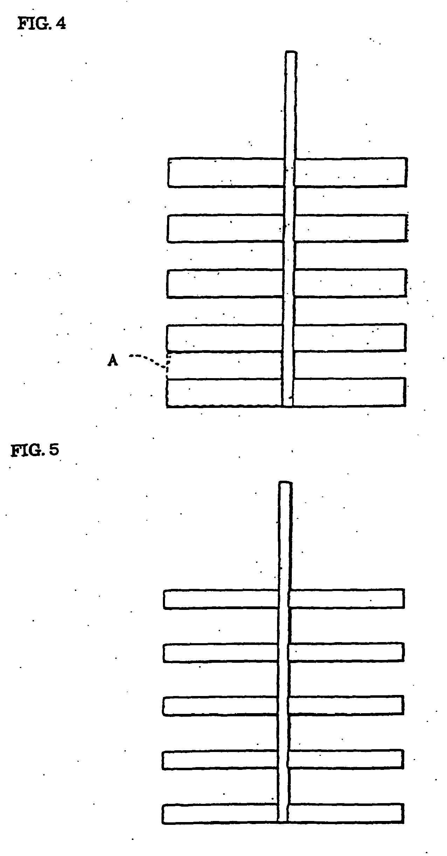

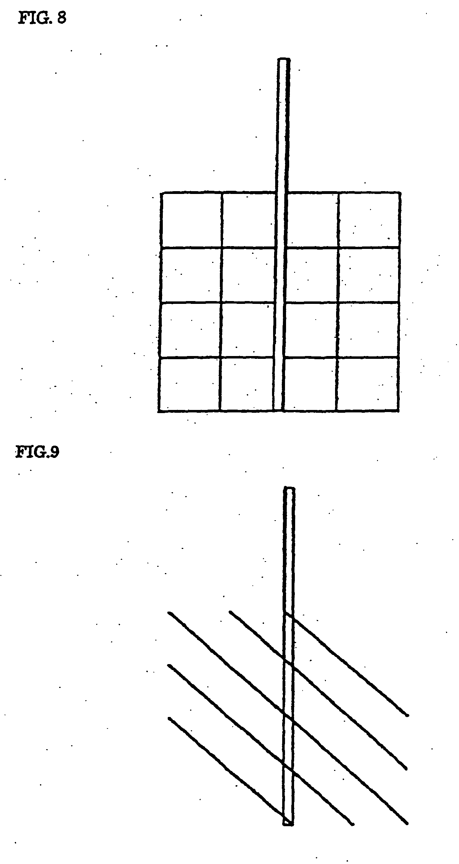

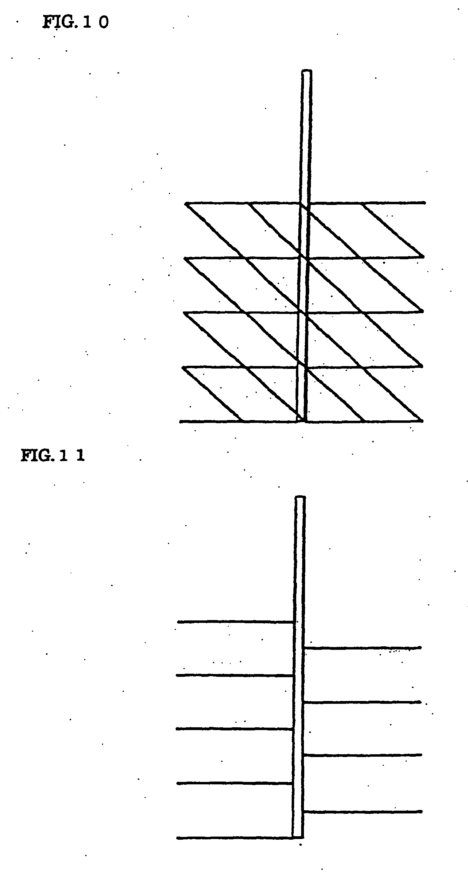

Each agitator blade extends in the outer direction, which is in the radial direction, from the rotary shaft. The direction may be horizontal (for example, Fig. 4). The direction may be tilt angle (for example, Fig. 9), or may be combination thereof (for example, Fig. 10). The vertical direction is, however, not preferable because the vertical direction gives less fluidization effect and pushes, slides and adheres the powdery wasted material to the inner wall surface of the heat-container. Preferable angles are ±60° to the horizontal plane, and more preferable angles are ±45°. With regard to the number of the agitator blades, it is in a range from 2 to 20 sheets of the agitator blades per meter along the fluidized bed height. It is normally around 3 to 10 sheets per meter. Concerning the position mounting the agitator blades to the rotary shaft, the mounted position of the right blade may be as the same as that of the left blade. Otherwise, it may be different position alternately. In case that the right blade has as the same position as the left blade, using the two blades, two sheets of the agitator blades become a single stage. Agitator blades may be arranged in linear allocation form the top view above, that is to say, allocated at every 180°. The allocation may be in three directions or in four directions (cross arrangement), or the like. Alternatively, the allocation may be arranged in spiral-staircase pattern. The position of the uppermost agitator blade may be above or beneath the top surface of the fluidized bed of the powdery waste.

According to the present invention, the agitator blades have 30% or less of the ratio of the horizontally projected area of the agitator blades to the area inside the envelope of the outermost edges of the agitator blades. The ratio is preferably 20% or less, and most preferably 15% or less. The lower limit of the projected area may be as small as possible, if the necessary strength of the agitator blade is kept. Normally, however, a preferred projected area is around 5%, and more preferably around 3%. The above-described envelope is normally in rectangular, trapezoid, or combination thereof. (The horizontal projected area of the agitator blades is defined as the projection area formed when the members of both the agitator shaft and the blade section in the heating apparatus are projected on a vertical plane (in a horizontal direction). The area inside the envelope of the outermost edges of the agitator blades is very close to the vertical cross sectional area of the heat-container between the upper edge of the uppermost blade and the lower edge of the lowermost blade. Actually, since the length of the agitator blade is slightly less than the inner diameter of the heating apparatus, the projected area becomes slightly smaller than the corresponding cross sectional area of the heating apparatus.)

The agitator blades may be single. Otherwise, the agitator blades may be arranged in three or more directions, which is radial to the rotary shaft. In this case, the agitator blades pass the same position continuously inside the space of the heat-container, while the agitator blades rotate. So, whichever different radial directions the agitator blades are mounted mutually, the projected area does not increase. That is, the projected area means that the area formed by a singe agitator blade. In other words, however the different agitator blades, a typical agitator blade or each agitator blade repeats the rotation, the projected area is defined as the same projected pattern in the unit operation during repeating.

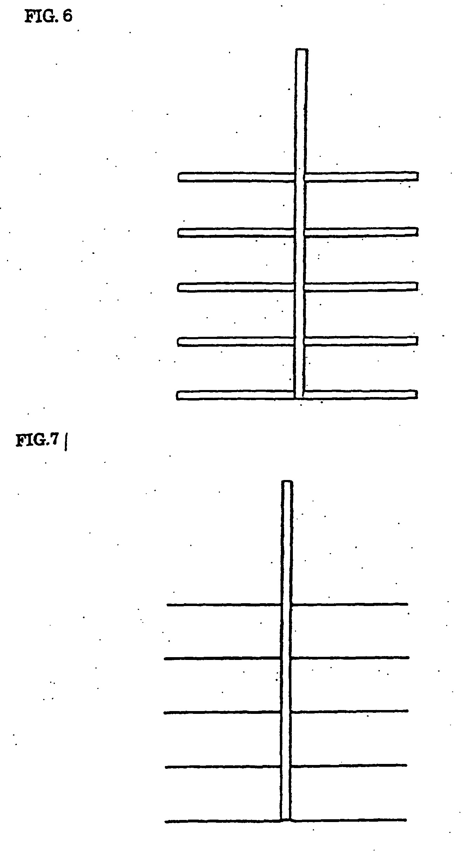

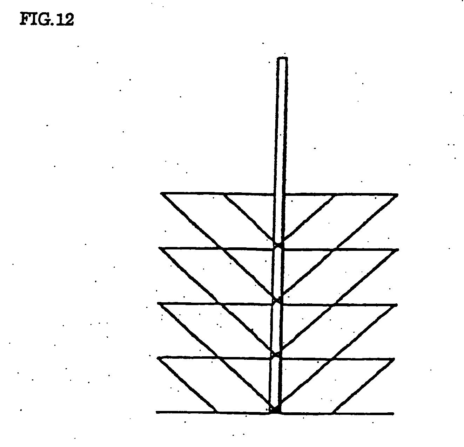

Fig. 4 through 12 show examples of the agitator blades. The agitator blades shown in Fig. 4 comprise five pairs of plate blades, which are arranged in the horizontal direction, and which are arranged on both sides of the rotary shaft at an equal distance. The agitator blades repeats projection pattern of A. The rate of the projected area of the agitator blade according to the present invention is the rate of the projected area of the agitator blade in the area enveloped by A. The agitator blades of Fig. 5 through Fig. 7 have the blade shortened in the width thereof from that in Fig. 4. The agitator blades in Fig. 7 are rods. The agitator blades in Fig. 8 are an example of lattice-arrangement of the rod blades. The agitator blades in Fig. 9 show an example of rod blades arranged in parallel to each other at 45° tilting angle. The agitator blades in Fig. 10 show an example that combines the rods, which are arranged in parallel to each other in the horizontal direction, with the rods, which are arranged in parallel to each other at 45° to the horizontal rods. In Fig.11, the agitator blades show an example that arranges alternately the rods, which are on the right side and the left side in the horizontal direction. In Fig.12, the agitator blades show an example that combines the rods arranged in parallel to each other in the horizontal direction, with the rods arranged in parallel to each other at 45° tilted to the horizontal rods. The agitator blades of Fig. 10 have the tilted blades in a straight shape. But, the agitator blades of Fig. 12 have the tilted blades folded at the rotary shaft, simultaneously facing the outer direction and facing the upward direction.

The rotational speed of the agitator blades is in a range approximately from 1 to 200 rpm, preferably approximately from 10 to 100 rpm, and more preferably approximately from 30 to 60 rpm.

Based on fluidizing by gaseous flow, the present invention has a various kind of powdery wasted material other than the exemplary embodiments. The adequate mean size of the powdery wasted particle is in a range of approximately from 0.1 to 1000 µm, normally approximately from 1 to 200 µm, preferably approximately from 1 to 50 µm. The density of the powdery wasted particle is approximately from 0.1 to 5 g/cm³, and normally approximately from 0.5 to 3 g/cm³. As one of the exemplary examples of the powdery wasted material, the following materials are described. For instance, ash wasted and incinerated from refuse or fly ash discharged from waste incineration furnace, wasted material such as activated carbon contaminated by adsorbed organic halogen compounds such as dioxin, and sludge and mud generated from water treatment or from sewage treatment process. Further examples of the powdery wasted material comprise sand, soil, river bottom mud, lake bottom mud, sea bottom mud, and slurry of wasted soil generated during digging and constructing a tunnel and the like, which are contaminated by organic matter, organic halide, heavy metal, and the like. For example, applicable powdery wasted material contains organic halogen compounds at around 0.1 to 100 ng-TEQ/g, particularly around 1 to 10 ng-TEQ/g determined by the method of JIS K0311.

The kind of gas used to fluidize the powdery waste may be adequately selected, taking the object of treatment into consideration. The gas is, normally, air, incinerator flue gas, nitrogen gas, steam, He, Ar, or the like.

The heat-treatment apparatus according to the present invention is provided with adequate auxiliary facilities, depending on the object of the treatment. For example, when the heat treatment is applied to vaporize and remove organic halogen compounds, an apparatus for thermally decomposing the organic halogen compounds carried by the flue gas, or an apparatus for catalytically decomposing the organic halogen compounds may be additionally installed.

It is preferable to install a dust eliminator at the gas outlet of the heating apparatus, in order to remove wasted dust and the like. The dust eliminator may be a bag filter, a cyclone, an electrostatic precipitator, a ceramics filter, and the like. Since the temperature of flue gas is in a range of from around 350°C to around 550°C and since the flue gas is further heated to be thermally decompose, the ceramics filter and the like which are applicable at high temperatures are preferred.

At the gas outlet-opening portion of the apparatus for heating, a thermal decomposition apparatus is connected with. In the process, the gas, which contains harmful organic halogen compounds, is heated to decompose the organic halogen compound. Furthermore, the gas is fed and treated in a catalytic reactor. The catalytic reactor catalytically decomposes the harmful organic halogen compound. The thermal decomposition apparatus has an inlet of gas being thermally decomposed in the closed space and this apparatus has an outlet of thermally decomposed gas. This thermal decomposition apparatus may make utilize of the general purpose type devices, which is used in high temperature combustion deodorization devices and the like. For instance, the present invention can apply the burner, the electric heater, the high frequency wave heater, the infrared heater, and a hot zone of waste incineration furnace, to the thermal decomposition apparatus.

The catalytic reactor may be fixed bed type, moving bed type, or fluidized bed type. The catalyst is selected, depending on the kind of harmful organic halogen compound. For example, when organic halogen compounds such as the dioxin are decomposed, an applicable catalyst includes: noble metal catalyst of at least one element selected from the group consisting of platinum group elements such as platinum, palladium, rhodium, and ruthenium, and gold; and oxide catalyst of at least one oxide of single or composite oxide of calcium, manganese, cobalt, chromium, iron, nickel, titanium, vanadium, and tungsten.

The operating condition of the heat-treatment apparatus according to the present invention is influenced by the object of the treatment. For example, the heating condition for treating a powdery wasted material contaminated by organic halogen compounds may be within a temperature range of around 350°C to around 550°C, preferably around 400°C to around 450°C. The average retention time is for around 5 to around 180 minutes, normally from around 30 to around 120 minutes. As a result, inside the heating apparatus, the organic halogen compounds are subjected to vaporization, and may be decomposed.

The powdery wasted material after removed organic halogen compounds and the like in the heating apparatus is required to be subjected to the secondary treatment, or to be dumped, or to be further utilized.

The gas containing vaporized organic halogen compounds is required to be subjected to dust-removal, and then is required to be subjected to decomposing the organic halogen compounds in the thermal decomposition apparatus or in the catalytic reactor. The thermal decomposition is carried out within temperatures from 800°C to 1000°C, preferably within temperatures approximately from 850°C to 950°C, in approximate average retention time from 0.5 to 20 seconds, preferably approximately from 1 to 5 seconds. The thermal decomposition decomposes the organic halogen compounds to the degree of about 50 to 95%, preferable to the degree of about 80 to 95%.

The catalytic reaction is carried out within temperature from 150°C to 500°C, preferably approximately from 150°C to 400°C at space velocities of approximately from 1000 to 10000 hr⁻¹. The catalytic reaction decomposes the organic halogen compounds to the degree of about 90% or more, preferably 95% or more. The combined and simultaneous use of the thermal decomposition apparatus and the catalytic reactor brings up the increase in decomposing the organic halogen compounds at a high rate. (The term "space velocity (SV)" referred herein signifies the amount of the gas volume. The condition for SV is regulated by flowing the gas inside the container, simultaneously with placing the solid inside the container. The value of the Space Velocity is defined as the amount of the treated gas volume, which is based on per unit solid volume and based on per unit time.)

### Example 1

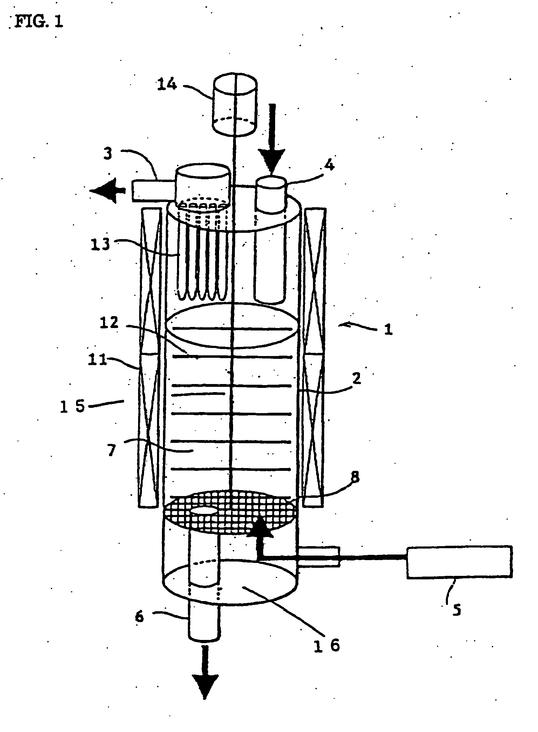

Figure 1 illustrates the outline of the heat-treatment apparatus used in Example 1, according to the present invention.

The heat treatment apparatus 1 is provided with a gas outlet opening 3 and a powdery waste inlet opening 4 at the upper portion of a cylindrical and vertical container 2, and with a gas introduction opening 5 and a powdery waste inlet opening 6 at the lower portion. The central portion of the container 2 is a powdery waste holding section 7. The powdery waste holding section 7 has a distributor 8, in order to distribute the gas at the bottom. A heater 11 is located at the outer periphery of the container 1 to heat the inner space of the container 1, while agitator blades 12 are located inside the container 1 to agitate the powdery waste. A dust collector 13 is located at the gas outlet opening 3 to remove the dust from the gas. A motor 14 is installed in order to rotate the agitator blades 12.

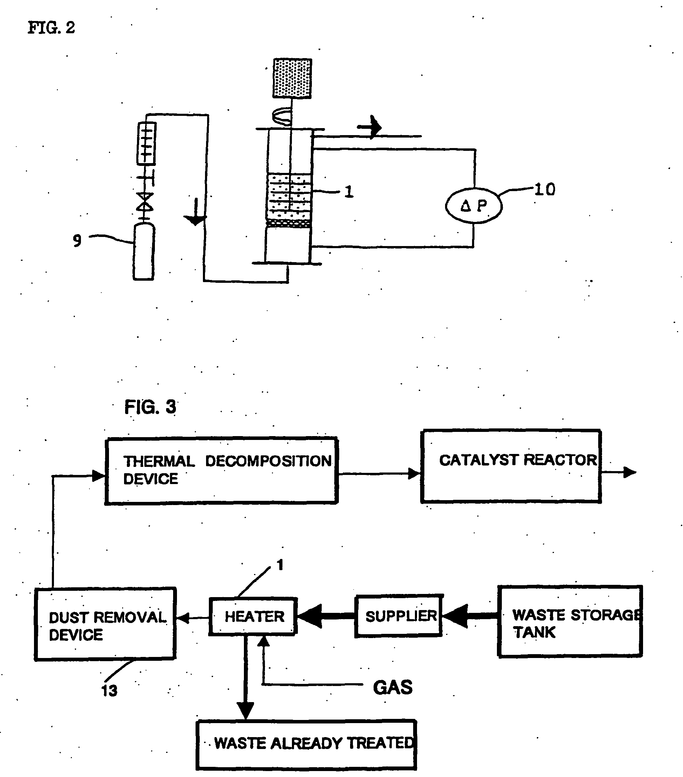

A fluidization bed model was fabricated by attaching a compressed air cylinder 9 and a pressure gauge 10 to the heat-treatment apparatus, as shown in Fig. 2. The pressure gauge 10 determines the pressure difference between a wind box under the gas distributor 8 and the space above the fluidizing bed of the powdery waste in the powdery waste holding section 7.

Using the fabricated fluidizing bed model, the fluidization experiments were done. The container 2 was made of acrylic resin, which had the inner diameter 120 mm, and the effective height 300 mm.

The applied powdery waste was fly ash, which had the mean particle size 15 µm, sampled from a waste incineration furnace. The fly ash was filled in the layer, as a stationary height, 100 mm. Air at room temperature was injected into the container at a linear velocity 13 cm/sec inside the container, in order to fluidize the powdery waste, while rotating the agitator blades 12. The height was measured, resulting from such a fluidized bed.

The experiments were done for each agitator blade mode, which is shown in Figs.4 through 12. Table 1 shows the determined height of the fluidized bed at each mode.

**Table 1**

| Agitator blades | Agitator blades | | Rate of projected area of agitator blades (%) | Height of fluidized bed (Expansion rate) (mm) | State of fluidization |
|---|---|---|---|---|---|
| | Tilted rod | Symmetry/ Asymmetry | | | |
| Fig. 4 | Not used | Symmetry | 50 | 105 (1.05) | Fly ash rotates in the agitator rotary direction, rotary direction, and does not fluidize. |
| Fig. 5 | Not used | Symmetry | 30 | 125 (1.25) | Fluidized while the rotation of fly ash in the agitator rotary direction is somewhat suppresses. |
| Fig. 6 | Not used | Symmetry | 10 | 145 (1.45) | Uniformly fluidized with very little move of fly ash in the agitator rotary direction. |
| Fig. 7 | Not used | Symmetry | 5 or less | 150 (1.50) | Uniformly fluidized with very little move of fly ash in the agitator rotary direction. |
| Fig. 8 | Not used | Symmetry | 5 or less | 127 (1.27) | Fluidization was hindered by the phenomenon of pushing and sliding the powdery waste against the inner wall surface by the vertical rods. |
| Fig. 9 | Used | Asymmetry | 5 or less | 147 (1.47) | Uniformly fluidized with very little move of fly ash in the agitator rotary direction. |
| Fig. 10 | Used | Asymmetry | 5 or less | 155 (1.55) | Uniformly fluidized with very little move of fly ash in the agitator rotary direction. |
| Fig. 11 | Not used | Asymmetry | 5 or less | 252 (1.52) | Uniformly fluidized with very little move of fly ash in the agitator rotary direction. |
| Fig. 12 | Used | Symmetry | 5 or less | 143 (1.43) | Uniformly fluidized with very little move of fly ash in the agitator rotary direction. |

### Example 2

A waste treatment apparatus shown in Fig. 3 was fabricated by allocating, in line, the thermal decomposition apparatus and the catalytic reactor for decomposing the organic halogen compounds at the exit of the above-described heat-treatment apparatus.

An electric heater was applied to the heat the thermal decomposition apparatus. The gas was heated while passing through a conduit which had an external electric heater.

The electric heater was controlled by heating the gas to the extent of 900°C, and the length of the conduit was adjusted to gain for keeping the retention time of the gas within 2 seconds or more and for keeping the temperature 900°C.

The catalysts were applied to the catalytic reactor, that is, a catalyst of platinum supported on a silica-alumina-base ceramics, whose catalyst support was in honeycomb shape. The quantity of catalyst was selected to ensure the space velocity 2000 hr⁻¹. The catalyst temperature was 400°C.

Using the waste treatment apparatus, the fly ash contaminated by dioxin and the like was treated. The analysis of harmful organic matter such as dioxin was done, which was in accordance with JIS K0311.

The treated amount of the fly ash was 100 kg/h, whose fly ash was treated in the heating apparatus, being submitted at 420°C and for 60 minutes. Air was used as the gas to accelerate vaporization. The fly ash, which was discharged from the heating apparatus after the heat treatment, was detected but the detected amount was so low. The value was sufficiently low concentration level of the harmful organic matter, or 0.004 ng-TEQ/g. (Dioxin differs in the toxicity, depending each isomer. And the toxicity coefficient is defined to each dioxin, which coefficient is called the "toxicity equivalent factor". The term TEQ is the sum of the multiplicated results between the product of the concentration of each isomer and the toxicity equivalent factor.)

The flue gas discharged from the heating apparatus via a dust filter was treated by the respective three methods: (I) sole thermal decomposition apparatus, (II) sole catalytic reactor, and (III) combination of the thermal decomposition apparatus and the catalytic reactor. Using the fly ashes having different sludge concentration mutually, the research and the investigation was done, in case that the different dioxin concentrations exist in the flue gas.

The discharged rate of the flue gas was 100 Nm³/h, under the condition at 900°C of thermal decomposition temperature and for 2 seconds. The catalytic reaction was done at 400°C. The obtained results are shown in Table 2.

**Table 2**

| | Flue gas of dust-separator | Flue gas of thermal decomposition apparatus | Flue gas of catalytic reactor |
|---|---|---|---|
| I | 90 | 8 | |
| | 5 | 0.8 | - |
| II | 72 | - | 2.5 |
| | 3.5 | | 0.02 |
| III | 83 | 6.5 | 0.04 |

| | | | |
|---|---|---|---|
| Unit: ng-TEQ/Nm³ | | | |

### Industrial Applicability

The present invention provides an apparatus for treating a powdery wasted material and a method the same. The invention enables the technological world to fluidize the powdery waste efficiently and to heat without inducing adhesion of the powdery waste to the apparatus.

## Claims

1. An apparatus for treating a powdery waste by heating (1) comprising:
a vertical and cylindrical heat-container (2) to hold a powdery waste;
a gas inlet opening (5) located at a bottom portion of the vertical and cylindrical heat-container as a passage for introducing a gas to fluidize the powdery waste;
a powdery waste holding section (7) located at a center portion of the vertical and cylindrical heat-container;
a distributor (8) located at the bottom portion of the vertical and cylindrical heat-container and at an end of the passage for introducing the gas, in order to distribute the gas;
a wind box section (16) located at the bottom portion of the vertical and cylindrical heat-container and beneath the gas distributor;
a gas outlet opening (3) located above the vertical and cylindrical heat-container and connecting with the heat-container as a passage to discharge the gas;
a powdery waste charge opening (4) located above the vertical and cylindrical heat-container and connecting with the heat-container as a passage to charge the powdery waste;
a powdery waste discharge opening (6) located beneath the vertical and cylindrical heat-container and connecting with the heat-container as a passage to discharge the powdery waste;
a rotary shaft (15) located inside the vertical and cylindrical container;
paddle blades (12) as agitator blades located inside the vertical and cylindrical heat-container to agitate the powdery waste;
a motor (14) for rotating a shaft of the agitator blades; and
a heating means (11) located at an outer periphery of the vertical and cylindrical heat-container for heating the powdery waste, **characterized in that**
the agitator blades have 30% or less of the ratio of a horizontally projected area of the agitator blades to an area inside the envelope of outermost edges of the agitator blades.

2. The apparatus according to claim 1, further comprising agitator blades having multiple blades extending from the shaft in different directions.

3. The apparatus according to claim 1 or claim 2, further comprising agitator blades configuring pluralities of bars lateral to the shaft.

4. The apparatus according to claim 1 or claim 2, further comprising agitator blades structured by pluralities of bars diagonally crossing the agitator blades.

5. The apparatus according to claim 1, further comprising a device for treating the powdery waste contaminated by an organic halogen compound, by heating.

6. The apparatus according to claim 5, further comprising a device connected to the gas outlet opening to detoxify the gas discharged from the gas outlet opening, wherein the device to detoxify the gas is at least one selected from the group consisting of a thermal decomposition apparatus for thermally decomposing the gas and a catalytic reactor for catalytically decomposing the gas.

7. The apparatus according to claim 6, further comprising an apparatus connected to the gas outlet opening to remove dust from the gas discharged from the gas outlet opening, wherein the dust removing apparatus is connected with the gas outlet opening, and wherein the dust removing apparatus is located at an upstream side of a thermal decomposition apparatus and a catalytic reactor.

8. A method for treating a powdery waste by heating comprising the steps of:
charging a powdery waste to a vertical and cylindrical heat-container from a top portion to hold the powdery waste at a powdery waste holding section;
fluidizing the powdery waste in a vertical and cylindrical heat-container by introducing a gas from a bottom portion;
heating the powdery waste in the vertical and cylindrical heat-container;
agitating the powdery waste in the vertical and cylindrical heat-container using paddle blades as agitator blades mounted in the vertical and cylindrical heat-container;
discharging the powdery waste treated by heating from the vertical and cylindrical heat-container; and
discharging the gas from the vertical and cylindrical heat-container, **characterized in that**
the agitator blades is determined to be 30% or less of the ratio of the horizontally projected area of the agitator blades to an area inside the envelope of outermost edges of the agitator blades.

9. The method according to claim 8 further comprising the step of heating the powdery waste contaminated by an organic halogen compound to vaporize the organic halogen compound and to remove the vaporized organic halogen compound along with the discharging gas.

10. The method according to claim 8, wherein the rate of the gas introduced to the vertical and cylindrical heat-container is in a range of approximately from 0.01 to 2 Nm³/kg of the powdery waste.

11. The method according to claim 8, wherein the speed of the gas introduced to the vertical and cylindrical heat-container is in a range of approximately from 0.1 to 30 Ncm/sec.

12. The method according to claim 8, wherein the step of heating the powdery waste comprises at least one step selected from the group consisting of heating the powdery waste from an external surface of the vertical and cylindrical heat-container and adopting hot gas as the gas to fluidize the powdery waste.

13. The method according to claim 8, wherein the step of agitating the powdery waste in the vertical and cylindrical heat-container adopts a rotational speed of the agitator blades in a range of approximately from 1 to 200 rpm.

14. The method according to claim 8, wherein the powdery waste introduced into the vertical and cylindrical heat-container has mean particle size of approximately from 0.1 to 1000 µm, and has densities of approximately from 0.1 to 5 g/cm³.

15. The method of claim 9, wherein the powdery waste contaminated by an organic halogen compound is heated to temperatures of approximately from 350°C to 550°C at approximate average retention time of from 5 to 180 min.

16. The method according to claim 8, wherein the powdery waste is introduced to the vertical and cylindrical heat-container comprises at least one material selected from the group consisting of, incinerated ash or fly ash discharged from waste incineration furnace, material containing organic halogen compound, sludge or mud coming from water treatment or sewage treatment, sand, soil, river bottom sand, lake bottom mud, sea bottom mud, or slurry of waste soil that contain organic matter, organic halide, or heavy metal.

17. The method according to claim 9 further comprising the step of removing dust from the gas containing vaporized harmful organic halogen compound using a dust separator before the thermal decomposition step and the catalytic reaction step.

18. The method according to claim 9, wherein the harmful organic halogen compound existed in the discharged gas is thermally decomposed at heating temperatures of approximately from 800°C to 1000°C at retention time of approximately from 0.5 to 20 sec.

19. The method of claim 9, wherein the harmful halogen compound existed in the discharged gas is catalytically reacted at temperatures of approximately from 150°C to 400°C at space velocities of from 1000 to 10000 h⁻¹.

## Patentansprüche

1. Vorrichtung zum Behandeln von Pulverabfällen durch Erwärmung (1), enthaltend:
einen vertikalen und zylindrischen Heizbehälter (2), der Pulverabfälle aufnimmt;
eine Gaseinlassöffnung (5), die an einem Bodenabschnitt des vertikalen und zylindrischen Heizbehälters als Durchgang zum Einleiten eines Gases angeordnet ist, um die Pulverabfälle in einen Fluidzustand zu versetzen;
einen Pulverabfall-Aufnahmeabschnitt (7), der sich in einem zentralen Abschnitt des vertikalen und zylindrischen Heizbehälters befindet;
einen Verteiler (8), der sich am Bodenabschnitt des vertikalen und zylindrischen Heizbehälters und an einem Ende des Durchgangs für das Einleiten des Gases befindet, um das Gas zu verteilen;
einen Gebläsekastenabschnitt (16), der sich am Bodenabschnitt des vertikalen und zylindrischen Heizbehälters und unter dem Gasverteiler befindet;
eine Gasauslassöffnung (3), die sich über dem vertikalen und zylindrischen Heizbehälter befindet und mit dem Heizbehälter als Durchgang zum Abgeben des Gases verbunden ist;
eine Pulverabfall-Befüllöffnung (4), die sich über dem vertikalen und zylindrischen Heizbehälter befindet und mit dem Heizbehälter als Durchgang verbunden ist, um die Pulverabfälle einzufüllen;
eine Pulverabfall-Auslassöffnung (6), die unter dem vertikalen und zylindrischen Heizbehälter angeordnet und mit dem Heizbehälter als Durchgang verbunden ist, um Pulverabfälle auszugeben;
eine Rotationswelle (15), die sich im Inneren des vertikalen und zylindrischen Behälters befindet;
Rührblätter (12) als Mischblätter, die sich im Inneren des vertikalen und zylindrischen Heizbehälters befinden, um die Pulverabfälle zu durchmischen;
einen Motor (14) zum Drehen einer Welle der Mischblätter; und
eine Heizeinrichtung (11), die sich an einem Außenrand des vertikalen und zylindrischen Heizbehälters zum Erwärmen der Pulverabfälle befindet;
**dadurch gekennzeichnet, dass** die Mischblätter höchstens 30% des Verhältnisses einer horizontal projizierten Fläche der Mischblätter zu einer Fläche im Inneren der Umhüllung haben, die durch die äußersten Ränder der Mischblätter beschrieben ist.

2. Vorrichtung nach Anspruch 1, weiterhin enthaltend Mischblätter, die über mehrere Blätter verfügen, die sich von der Welle in unterschiedliche Richtungen erstrecken.

3. Vorrichtung nach Anspruch 1 oder 2, weiterhin enthaltend Mischblätter, die mehrere Stäbe seitlich der Welle ausbilden.

4. Vorrichtung nach Anspruch 1 oder 2, weiterhin enthaltend Mischblätter, die durch mehrere Stäbe strukturiert sind, die die Mischblätter diagonal kreuzen.

5. Vorrichtung nach Anspruch 1, weiterhin enthaltend eine Vorrichtung zum Behandeln der Pulverabfälle, die durch eine organische Halogenverbindung verunreinigt sind, durch Erwärmen.

6. Vorrichtung nach Anspruch 5, weiterhin enthaltend eine Vorrichtung, die mit der Gasauslassöffnung verbunden ist, um das Gas zu entgiften, das aus der Auslassöffnung ausgegeben wird, wobei die Vorrichtung zum Entgiften des Gases wenigstens eine Vorrichtung ist, aus der Gruppe gewählt ist, die aus einer thermischen Zerlegungsvorrichtung zum thermischen Zerlegen des Gases und einem katalytischen Reaktor zum katalytischen Zerlegen des Gases besteht.

7. Vorrichtung nach Anspruch 6, weiterhin enthaltend eine Vorrichtung, die mit der Gasauslassöffnung verbunden ist, um Staub aus dem Gas zu entfernen, das aus der Gasauslassöffnung ausgegeben wird, wobei die Vorrichtung zum Entfernen des Staubes mit der Gasauslassöffnung verbunden ist und sich die Vorrichtung zum Entfernen des Staubes auf einer stromaufwärtigen Seite einer thermischen Zerlegungsvorrichtung und eines katalytischen Reaktors befindet.

8. Verfahren zum Behandeln von Pulverabfällen durch Erwärmen, umfassend folgende Schritte:
Füllen von Pulverabfällen in einen vertikalen und zylindrischen Heizbehälter von einem oberen Abschnitt, um die Pulverabfälle in einem Pulverabfall-Aufnahmeabschnitt aufzunehmen;
Fluidisieren der Pulverabfälle in einem vertikalen und zylindrischen Heizbehälter durch Einleiten eines Gases von einem Bodenabschnitt;
Erwärmen der Pulverabfälle in dem vertikalen und zylindrischen Heizbehälter;
Durchmischen der Pulverabfälle in dem vertikalen und zylindrischen Heizbehälter mit Hilfe von Rührblättern als Mischblätter, die in dem vertikalen und zylindrischen Heizbehälter angebracht sind;
Ausgeben der Pulverabfälle, die durch Erwärmen behandelt wurden, aus dem vertikalen und zylindrischen Heizbehälter; und
Auslassen des Gases aus dem vertikalen und zylindrischen Heizbehälter;
**dadurch gekennzeichnet, dass** die Mischblätter so bestimmt sind, dass sie höchstens 30% des Verhältnisses einer horizontal projizierten Fläche der Mischblätter zu einer Fläche im Inneren der Umhüllung haben, die durch die äußersten Ränder der Mischblätter beschrieben ist.

9. Verfahren nach Anspruch 8, weiterhin umfassend den Schritt des Erwärmens der Pulverabfälle, die mit einer organischen Halogenverbindung verunreinigt sind, um die organische Halogenverbindung zu verdampfen und die verdampfte organische Halogenverbindung zusammen mit dem Gas zu entfernen, das ausgelassen wird.

10. Verfahren nach Anspruch 8, bei dem die Rate, mit dem das Gas in den vertikalen und zylindrischen Heizbehälter eingeleitet wird, in einem Bereich von etwa 0,01 bis 2 Nm³/kg der Pulverabfälle liegt.

11. Verfahren nach Anspruch 8, bei dem die Geschwindigkeit des Gases, das in den vertikalen und zylindrischen Heizbehälter eingeleitet wird, in einem Bereich von etwa 0,1 bis 30 Ncm/sek liegt.

12. Verfahren nach Anspruch 8, bei dem der Schritt des Erwärmens der Pulverabfälle wenigstens einen Schritt umfasst, der aus der Gruppe gewählt ist, die aus dem Erwärmen der Pulverabfälle von einer Außenoberfläche des vertikalen und zylindrischen Heizbehälters und dem Einsetzen von heißem Gas als das Gas zum Fluidisieren der Pulverabfälle besteht.

13. Verfahren nach Anspruch 8, bei dem der Schritt des Mischens der Pulverabfälle in dem vertikalen und zylindrischen Heizbehälter eine Rotationsgeschwindigkeit der Mischblätter anwendet, die in einem Bereich von etwa 1 bis 200 U/min liegt.

14. Verfahren nach Anspruch 8, bei dem die Pulverabfälle, die in den vertikalen und zylindrischen Heizbehälter eingeleitet werden, eine mittlere Partikelgröße von etwa 0,1 bis 1.000 µm und Dichten von etwa 0,1 bis 5 g/cm³ haben.

15. Verfahren nach Anspruch 9, bei dem die Pulverabfälle, die durch eine organische Halogenverbindung verunreinigt sind, auf eine Temperatur von etwa 350°C bis 550°C bei einer durchschnittlichen Verweilzeit von etwa 5 bis 180 min erwärmt werden.

16. Verfahren nach Anspruch 8, bei dem die Pulverabfälle, die in den vertikalen und zylindrischen Heizbehälter eingeleitet werden, wenigstens ein Material enthalten, das aus der Gruppe gewählt ist, die aus Verbrennungsasche oder Flugasche, die aus einem Müllverbrennungsofen abgegeben wird, Material, das eine organische Halogenverbindung enthält, Schlamm oder Matsch, die bei der Wasseraufbereitung oder in Kläranlagen entstehen, Sand, Erdreich, Flussbettsand, Seegrundsand, Meerbodensand oder Schlamm von zu entsorgendem Erdreich besteht, das organische Substanzen, organische Halide oder Schwermetalle enthält.

17. Verfahren nach Anspruch 9, weiterhin umfassend den Schritt des Entfernens von Staub aus dem Gas, das die verdampfte, schädliche, organische Halogenverbindung enthält, mit Hilfe eines Staubabscheiders vor dem thermischen Zerlegungsschritt und dem katalytischen Reaktionsschritt.

18. Verfahren nach Anspruch 9, bei dem die schädliche, organische Halogenverbindung, die in dem ausgelassenen Gas enthalten war, mit Heiztemperaturen von etwa 800°C bis 1.000°C bei einer Verweilzeit von etwa 0,5 bis 20 Sekunden thermisch zerlegt wird.

19. Verfahren nach Anspruch 9, bei dem die schädliche Halogenverbindung, die in dem ausgelassenen Gas enthalten war, einer katalytischen Reaktion mit Temperaturen von etwa 150°C bis 400°C bei Raumgeschwindigkeiten von 1.000 bis 10.000 h⁻¹ unterzogen wird.

## Revendications

1. Appareil de traitement de déchets pulvérulents par chauffage (1), comprenant :
un contenant de chaleur vertical et cylindrique (2) permettant de contenir des déchets pulvérulents ;
une ouverture d'admission de gaz (5) située au niveau d'une portion inférieure du contenant de chaleur vertical et cylindrique en tant que passage permettant d'introduire un gaz pour fluidiser les déchets pulvérulents ;
une section de retenue de déchets pulvérulents (7) située au niveau d'une portion centrale du contenant de chaleur vertical et cylindrique ;
un distributeur (8) situé au niveau de la portion inférieure du contenant de chaleur vertical et cylindrique et à une extrémité du passage permettant d'introduire le gaz, afin de distribuer le gaz ;
une section de boîte à vent (16) située au niveau de la portion inférieure du contenant de chaleur vertical et cylindrique et en dessous du distributeur de gaz ;
une ouverture de refoulement de gaz (3) située au-dessus du contenant de chaleur vertical et cylindrique et se reliant avec le contenant de chaleur en tant que passage pour décharger le gaz ;
une ouverture de charge de déchets pulvérulents (4) située au-dessus du contenant de chaleur vertical et cylindrique et se reliant avec le contenant de chaleur en tant que passage pour charger les déchets pulvérulents ;
une ouverture de décharge de déchets pulvérulents (6) située au-dessous du contenant de chaleur vertical et cylindrique et se reliant avec le contenant de chaleur en tant que passage pour décharger les déchets pulvérulents ;
un arbre rotatif (15) situé à l'intérieur du contenant vertical et cylindrique ;
des pales de brassage (12) en tant que pales d'agitateur situées à l'intérieur du contenant de chaleur vertical et cylindrique pour agiter les déchets pulvérulents ;
un moteur (14) permettant de faire tourner un arbre des pales d'agitateur ; et
un moyen de chauffage (11) situé au niveau d'une périphérie externe du contenant de chaleur vertical et cylindrique permettant de chauffer les déchets pulvérulents, **caractérisé en ce que** les pales d'agitateur possèdent un rapport d'une aire projetée horizontalement des pales d'agitateur sur une aire à l'intérieur de l'enveloppe des bords les plus externes des pales d'agitateur de 30 % ou moins.

2. Appareil selon la revendication 1, comprenant en outre des pales d'agitateur comportant de multiples pales s'étendant depuis l'arbre dans différentes directions.

3. Appareil selon la revendication 1 ou la revendication 2, comprenant en outre des pales d'agitateur configurant des pluralités de barres latérales à l'arbre.

4. Appareil selon la revendication 1 ou la revendication 2, comprenant en outre des pales d'agitateur structurées par des pluralités de barres croisant en diagonale les pales d'agitateur.

5. Appareil selon la revendication 1 comprenant en outre un dispositif permettant de traiter les déchets pulvérulents contaminés par un composé halogéné organique, par chauffage.

6. Appareil selon la revendication 5, comprenant en outre un dispositif relié à l'ouverture de refoulement de gaz pour détoxifier le gaz déchargé de l'ouverture de refoulement de gaz, dans lequel le dispositif pour détoxifier le gaz est au moins un élément choisi dans le groupe constitué par un appareil de décomposition thermique permettant de décomposer thermiquement le gaz et un réacteur catalytique permettant de décomposer catalytiquement le gaz.

7. Appareil selon la revendication 6, comprenant en outre un appareil relié à l'ouverture de refoulement de gaz pour éliminer la poussière du gaz déchargé de l'ouverture de refoulement de gaz, dans lequel l'appareil d'élimination de poussière est relié à l'ouverture de refoulement de gaz, et dans lequel l'appareil d'élimination de poussière est situé d'un côté amont de l'appareil de décomposition thermique et d'un réacteur catalytique.

8. Procédé de traitement de déchets pulvérulents par chauffage comprenant les étampes :
de chargement de déchets pulvérulents dans un contenant de chaleur vertical et cylindrique depuis une portion supérieure pour retenir les déchets pulvérulents dans une section de retenue de déchets pulvérulents ;
de fluidification des déchets pulvérulents dans un contenant de chaleur vertical et cylindrique en introduisant un gaz depuis une portion inférieure ;
de chauffage des déchets pulvérulents dans le contenant de chaleur vertical et cylindrique ;
d'agitation des déchets pulvérulents dans le contenant de chaleur vertical et cylindrique à l'aide des pales de brassage en tant que pales d'agitateur montées dans le contenant de chaleur vertical et cylindrique ;
de déchargement des déchets pulvérulents traités par chauffage depuis le contenant de chaleur vertical et cylindrique ; et
de déchargement du gaz du contenant de chaleur vertical et cylindrique, **caractérisé en ce que** les pales d'agitateur sont déterminées pour posséder un rapport entre l'aire projetée horizontalement des pales d'agitateur et une aire à l'intérieur de l'enveloppe des bords les plus externes des pales d'agitateur de 30 % ou moins.

9. Procédé selon la revendication 8, comprenant en outre l'étape de chauffage des déchets pulvérulents contaminés par un composé halogéné organique pour vaporiser le composé halogéné organique et éliminer le composé halogéné organique vaporisé conjointement avec le gaz en cours de décharge.

10. Procédé selon la revendication 8, dans lequel le taux du gaz introduit dans le contenant de chaleur vertical et cylindrique est dans une plage d'approximativement 0,01 à 2 Nm³/kg des déchets pulvérulents.

11. Procédé selon la revendication 8, dans lequel la vitesse du gaz introduit dans le contenant de chaleur vertical et cylindrique est dans une plage d'approximativement 0,1 à 30 Ncm/s.

12. Procédé selon la revendication 8, dans lequel l'étape de chauffage des déchets pulvérulents comprend au moins une étape choisie dans le groupe constitué par le chauffage des déchets pulvérulents à partir d'une surface externe du contenant de chaleur vertical et cylindrique et l'adoption d'un gaz chaud en tant que gaz pour fluidiser les déchets pulvérulents.

13. Procédé selon la revendication 8, dans lequel l'étape d'agitation des déchets pulvérulents dans le contenant de chaleur vertical et cylindrique adopte une vitesse de rotation des pales d'agitateur dans une plage d'approximativement 1 à 200 tr/min.

14. Procédé selon la revendication 8, dans lequel les déchets pulvérulents introduits dans le contenant de chaleur vertical et cylindrique possèdent une taille moyenne de particule d'approximativement 0,1 à 1 000 µm, et possèdent des masses volumiques d'approximativement 0,1 à 5 g/cm³.

15. Procédé selon la revendication 9, dans lequel les déchets pulvérulents contaminés par un composé halogéné organique sont chauffés à des températures d'approximativement 350°C à 550°C à un temps de rétention moyen approximatif de 5 à 180 min.

16. Procédé selon la revendication 9, dans lequel les déchets pulvérulents sont introduits dans le contenant de chaleur vertical et cylindrique et comprennent au moins une matière choisie dans le groupe constitué par les cendres incinérées ou les cendres volantes déchargées d'un four d'incinération de déchets, une matière contenant un composé halogéné organique, une boue provenant du traitement des eaux ou du traitement des eaux usées, du sable, de la terre, du sable de fond de rivière, de la boue de fond de lac, de la boue de fond marin, ou une boue de résidus de terre qui contient de la matière organique, un halogénure organique ou un métal lourd.

17. Procédé selon la revendication 9, comprenant en outre l'étape d'élimination de la poussière du gaz contenant un composé halogéné organique nocif vaporisé à l'aide d'un séparateur de poussière avant l'étape de décomposition thermique et l'étape de réaction catalytique.

18. Procédé selon la revendication 9, dans lequel le composé halogéné organique nocif existant dans le gaz déchargé est décomposé thermiquement à une température de chauffage d'approximativement 800 °C à 1 000 °C à un temps de rétention d'approximativement 0,5 à 20 s.

19. Procédé selon la revendication 9, dans lequel le composé halogéné nocif existant dans le gaz déchargé réagit catalytiquement à des températures d'approximativement 150 °C à 400 °C à des vitesses spatiales de 1 000 à 10 000 h-¹.
